# EUROPÄISCHE PATENTSCHRIFT

(11) **EP 2 419 246 B1**
(45) Veröffentlichungstag und Bekanntmachung des Hinweises auf die Patenterteilung: **26.06.2013**
(21) Anmeldenummer: 10708936.9
(22) Anmeldetag: 12.03.2010
(51) Int. Cl.: B25J 9/10, B25J 9/12, B25J 18/04, F16H 19/00

(54) **AKTOR MIT BAND- ODER SEILARTIGEN ELEMENTEN**
ACTUATOR WITH ROPE- OR BELTLIKE ELEMENTS
ACTUATEUR AVEC DES ÉLÉMENTS DU TYPE CABLE OU COURROIE

(30) Priorität: 15.04.2009 DE 102009017503
(43) Veröffentlichungstag der Anmeldung: 22.02.2012
(73) Patentinhaber: Fraunhofer-Gesellschaft zur Förderung der angewandten Forschung e.V., 80686 München (DE)
(72) Erfinder: ROST, Arne, 70565 Stuttgart-Vaihingen (DE); PFEIFFER, Kai, 70771 Leinfelden (DE)
(74) Vertreter: Rösler, Uwe
(86) Internationale Anmeldenummer: PCT/EP2010/001583
(87) Internationale Veröffentlichungsnummer: WO 2010/118804

(56) Entgegenhaltungen:
- DE-A1-102006 012 431
- FR-A1- 2 832 345
- US-A- 3 044 312
- US-A- 4 613 798
- US-A- 5 046 375
- US-A1- 2005 122 722
- US-B1- 6 622 580

## Beschreibung

### Technisches Gebiet

Die Erfindung bezieht sich auf einen Aktor mit einem eine Welle in Rotation versetzenden Wellenantrieb, um dessen Welle wenigstens zwei band- oder seilartige Elemente, im folgenden jeweils als "Seile" genannt mit jeweils zwei Seilenden, in Abhängigkeit der Wellendrehrichtung auf- und abwickelbar sind, von denen jeweils das erste Seilende an einem Seilbefestigungsort längs der Welle verbunden ist und die Seilbefestigungsorte beider ersten Seilenden axial längs der Welle zueinander beabstandet sind, und von denen jeweils die zweiten Seilenden mit einer ersten Aktoreinheit derart in Wirkverbindung stehen, dass die Seile zwischen der Welle und der ersten Aktoreinheit stets gestrafft verlaufen, durch Aufwickeln des ersten Seils auf die Welle die erste Aktoreinheit eine rotatorische und/oder translatorische erste Bewegung ausführt, während sich das zweite Seil von der Welle abwickelt, und durch Aufwickeln des zweiten Seils auf die Welle die erste Aktoreinheit eine zur ersten Bewegung umgekehrte Bewegung ausführt, während sich das erste Seil von der Welle abwickelt.

Ein solchen Aktor ist aus der US-A-5046 375 bekannt.

### Stand der Technik

Aktoren zur Übertragung von Zugkräften, beispielsweise zwischen einem mechanischem festen Gegenlager und einem gegenüber dem Gegenlager beweglich gelagerten Objekt, sind in mannigfaltiger Vielfalt bekannt. Eine sehr einfache Ausführungsform eines derartigen Aktors stellt eine mit einem festen Gegenlager verbundene, motorisch angetriebene Welle dar, um die als Zugmittel ein Seil gewickelt ist, das bei entsprechender Wellendrehung auf die Welle aufgewickelt bzw. abgewickelt wird. Ist das lose Ende des Seils beispielsweise mit einem ansonsten lose gelagerten Objekt fest verbunden, so wird durch die motorunterstützte Seilaufwicklung das Objekt in Richtung des festen Gegenlagers gezogen. Nachteilhaft einer derartigen Aktorausbildung ist die direkte Lasteinwirkung auf die Welle, die es gilt geeignet stabil auszubilden und/oder stabil zu lagern. Derartige Seilzugaktoren werden im Bereich der mechanischen Antriebstechnik in vielfältigen Ausgestaltungsformen zum Antrieb bzw. zur Lokomotion kinematischer Systeme eingesetzt.

Von besonderem Interesse für die Ansteuerung und deren Betrieb beweglicher Mechaniken im industriellen Maßstab, beispielsweise zur Betätigung von Greifer-, Hebel-, Klappen-, Schieber-Anordnungen etc. aber insbesondere auch für die Realisierung beweglicher Prothesen zum Zwecke der Nachbildung beispielsweise einer menschlichen Hand, oder für die Realisierung beliebig artikulierter Roboterkinematiken, wie sie bei Industrieroboterarmen oder künstlichen Fortbewegungsmechanismen eingesetzt werden, sind so genannte muskelähnliche Aktoren bekannt, die zwar in der Lage sind sich unter großer Kraftgenerierung zusammenzuziehen, doch lediglich nur geringe Rückstellkräfte zu erzeugen vermögen, durch die eine kraftvolle Rückführung in den aktorischen Ausgangszustand möglich wäre. So bedarf es für ein entsprechendes Auseinanderziehen derartiger muskelähnlicher, in den komprimierten Zustand überführter Aktoren zumeist einer äußeren Krafteinwirkung um den elongierten Ausgangszustand wieder einzunehmen.

In der US 5,046,375 ist ein um eine Achse bidirektional verschwenkbar gelagerter Hebelmechanismus erläutert, dessen bidirektionale Auslenkung ausschließlich auf der Grundlage zweier längs einer gemeinsamen, motorisch angetriebenen Welle teilaufgewickelter Seilzüge beruht. Die wellenseitige Befestigung der Seilzüge erfolgt mit jeweils zueinander entgegengesetzt orientiertem Wickelsinn, so dass bei Wellendrehung der eine Seilzug auf die Welle auf- und der andere von der Welle abgewickelt wird und umgekehrt. Die dem Wellenantrieb abgewandten Seilenden beider Seilzüge sind jeweils an einem über eine gemeinsame Achse miteinander verbundenen Rollenpaar befestigt, das wiederum jeweils über einen getrennten Seilzug mit dem um eine Schwenkachse gelagerten Hebelarm kinematisch gekoppelt ist. Je nach Drehrichtung des Wellenantriebes wird der eine oder andere Seilzug auf die Welle aufgewickelt, wobei die sich längs des auf die Welle aufwickelnden Seiles ausbildende Seilzugkraft das Rollenpaar in Rotation versetzt, durch das der Hebelarm kraftbeaufschlagt ausgelenkt wird. Durch Umkehrung der Drehrichtung des Wellenantriebes lässt sich der Hebelarm mit Hilfe des gleichen Wirkmechanismus unter Umkehrung von Dreh- und Kraftwirkung in die entgegengesetzte Schwenkrichtung auslenken.

Zwar ermöglicht der bekannte Aktor eine jeweils kraftbeaufschlagte bidirektionale Auslenkung eines Hebelarms unter Verwendung von ausschließlich nur Zugkräfte übertragenden Seilzügen, doch sind hierbei die durchaus u. U. beträchtlichen Seilzugkräfte durch die Welle und letztlich durch den räumlich fest montierten Wellendrehantrieb aufzunehmen. Dies setzt massive und schwergewichtige Komponenten am Drehantrieb voraus.

Der DE 10 2006 012 431 A1 ist ein Aktor mit einer motorisch angetriebenen Welle zu entnehmen, auf die zwei Seilzüge derart aufgewickelt werden, so dass sich die längs der jeweiligen Seilzüge auf die Welle einwirkenden Zugkräfte am Ort der Welle weitgehend kompensieren und daher die Welle nahezu kraftfrei gelagert werden kann. Hierbei gilt es darauf zu achten, dass sich die tangential am Wellenumfang befindlichen Krafteinleftungspunkte, an denen die Seilzüge durch den Auf- bzw. Abwickelvorgang zur Anlage gebracht werden, stets diametral gegenüber liegen. Zur Sicherstellung einer derartigen Aufwicklung ist längs der Welle ein entsprechendes Begrenzungselement vorgesehen, durch das die Seilzüge einlagig und in helikaler Anordnung um die Welle in Anlage gebracht werden kann. Mit Hilfe des bekannten Aktors lassen sich jedoch ausschließlich Zugkräfte längs der Seile nutzen, die durch den Aufwickelvorgang generiert werden. Gilt es, wie im vorstehend geschilderten Fall, eine kraftbeaufschlagte bidirektionale Bewegung zu initiieren, so bedarf es zweier Aktoren der vorstehend beschriebenen Bauart, die mit jeweils entgegengesetzt gerichteter Kraftwirkung, beispielsweise an einem verschwenkbaren Hebelmechanismus angreifen. Dies führt jedoch im Vergleich zu einer nur einfachen Aktorauslegung zu einer Gewichtsverdopplung sowie zu einer ausladenden Bauweise unter Benötigung eines größeren Bauraumes. Zudem bedarf es zur Gewährleistung einer fehlerfreien Funktionsweise des bekannten Aktorsystems einer andauernden Straffung der beteiligten Seilzüge, beispielsweise durch Vorsehen einer Vorspannung längs der Seile, da sonst eine helikale Aufwicklung der wenigstens zwei Seilzüge auf die Welle nicht gewährleistet werden kann.

### Darstellung der Erfindung

Ausgehend von dem in der US 5,046,375 beschriebenen, zur bidirektionalen Auslenkung befähigten Aktor besteht die Aufgabe darin, einen auf dem vorstehenden bidirektionalen Aktorprinzip beruhenden Aktor anzugeben, an den weitaus geringere Anforderungen in Bezug auf mechanische Belastungsanforderungen sowie Robustheit hinsichtlich der Ausbildung und Lagerung des Wellenantriebes zu stellen sind. Der neuartige Aktor soll über ein Höchstmaß an Integrationsfähigkeit in mechanisch komplexe Systeme verfügen und überdies nahezu beliebig miniaturisierbar sein. Mit Hilfe des neuartigen Aktors sollen mit möglichst einfachen und kostengünstigen Mitteln kinematische und zur Lokomotion befähigte Systeme realisierbar sein, die insbesondere im Bereich der Prothetik sowie beliebig artikulierter Roboterkinematiken einsetz- und anwendbar sind.

Die Lösung der der Erfindung zugrunde liegenden Aufgabe ist im Anspruch 1 angegeben. Den Erfindungsgedanken vorteilhaft weiterbildende Merkmale sind Gegenstand der Unteransprüche sowie insbesondere aus der nachfolgenden Beschreibung unter Bezugnahme auf die Ausführungsbeispiele zu entnehmen.

Von entscheidender Bedeutung für die Funktionsweise des lösungsgemäßen Aktors ist ein geordneter Seilverlauf längs der Welle, der durch die erste axial bewegliche Umlenkeinheit sichergestellt wird. So werden bei Drehung der Welle mit einer vorgegebenen Drehrichtung eines der beiden Seile längs der Welle auf- und das andere in gleicher Weise abgewickelt. Um ein möglichst einlagiges und jeweils helikal die Welle umschlingendes Wickelmuster des Seils jeweils ausgehend vom Seilbefestigungsort um die Welle zu erhalten, gilt es die erste Umlenkeinheit synchronisiert mit der Wicklungsgeschwindigkeit axial zur Welle derart auszulenken, so dass die axiale Seilzuführung, im Falle des sich auf die Welle aufwickelnden Seils, stets so erfolgt, dass das Seil unmittelbar benachbart zum bereits auf der Welle aufgewickelten Seilabschnitt an der Welle zur Anlage gebracht wird. Hierbei schließt der auf die Welle unmittelbar zulaufende Seilabschnitt mit der Welle stets einen gleich bleibenden Wickelwinkel ein. In gleicher Weise erfolgt auch der Abwickelvorgang des Seils von der Welle, d.h. die in Richtung der ersten Umlenkeinheit erfolgende Seilabwicklung findet ebenfalls stets unter einem gleichbleibenden Wickelwinkel statt, den der unmittelbar von der Welle abwickelnde Seilverlauf mit der axialen Längsverstreckung der Welle einschließt. Neben einer geordneten Ab- und Aufwicklung des Seils von der Welle und auf die Welle gewährleistet die auf die Wickelgeschwindigkeit abgestimmte axiale Lageverschiebung der ersten Umlenkeinheit einen gleichbleibenden Seilzug längs beider Seile.

In einer vorteilhaften Ausführungsform ist die axiale Relativlage der ersten Umlenkeinheit in Bezug zu den Seilbefestigungsorten längs der Welle derart gewählt, dass die Umlenkeinheit in Projektion zur Wellenachse mittig zwischen beiden Seilbefestigungsorten angeordnet ist, sofern jeweils die gleiche oder in etwa die gleiche Seillänge angrenzend zu beiden Seilbefestigungsorten auf der Welle aufgewickelt ist. Hierdurch schließen beide, auf die Welle teilaufgewickelte Seilzüge mit der Welle jeweils einen gleichgroßen Wickelwinkel ein, der während des gesamten Auf- und Abwickelvorganges, unabhängig von der Wellendrehrichtung, aufgrund einer auf die Drehgeschwindigkeit und Drehrichtung abgestimmten axialen Lageveränderung der Umlenkeinheit, konstant bleibt.

Durch Vorsehen der vorstehend erläuterten axial beweglichen ersten Umlenkeinheit, über die beide Seilzüge in geordneter Form auf die Welle auf- und abgewickelt werden, ist zwar ein Aktor grundsätzlich realisierbar, mit dem eine geeignet ausgebildete Bewegungseinheit bidirektional auslenkbar ist, jedoch würde die Welle aufgrund der nur in Richtung der Umlenkeinheit wirkenden Zugkräfte starken mechanischen Belastungen unterliegen, die es lösungsgemäß zu vermeiden gilt. Aus diesem Grunde sind ein erstes Seilende eines dritten Seils im Bereich des einen Seilbefestigungsortes und ein erstes Seilende eines vierten Seils im Bereich des anderen Seilbefestigungsortes mit der Welle verbunden. Ferner stehen die jeweils zweiten Seilenden des dritten und vierten Seils mit der ersten und/oder einer zweiten Aktoreinheit derart in Wirkverbindung, dass das dritte und vierte Seil zwischen der Welle und der ersten und/oder zweiten Aktoreinheit stets gestrafft verlaufen, durch Aufwickeln des dritten Seils auf die Welle die erste und/oder zweite Aktoreinheit eine rotatorische und/oder translatorische erste Bewegung ausführt, während sich das vierte Seil von der Welle abwickelt, und durch Aufwickeln des vierten Seils auf die Welle die erste und/oder zweite Aktoreinheit eine zur ersten Bewegung umgekehrte Bewegung ausführt, während sich das dritte Seil von der Welle abwickelt. Hierbei ist jedoch wesentlich, dass wenigstens eine zweite Umlenkeinheit vorgesehen ist, die mit einem orthogonalen Abstand zur Welle sowie in orthogonaler Projektion auf die Welle zwischen beiden Seilbefestigungsorten axial beweglich relativ zur Welle angeordnet ist, die der ersten Umlenkeinheit relativ zur Welle diametral gegenüberliegt und über die das dritte und vierte Seil zur unmittelbaren Auf- oder Abwicklung auf oder von der Welle zwangsgeführt sind.

An dieser Stelle sei ausdrücklich angemerkt, dass die vorstehend als erstes und zweites Seil bezeichneten Seile auch durch ein einziges, durchgängiges Seil ersetzt werden können, dessen beide Seilenden an den beschriebenen Seilbefestigungsorten längs der Welle befestigt sind. Die erste Aktoreinheit befindet sich in diesem Fall mit einem, vorzugsweise mittleren Seilabschnitt längs des einzigen Seils in Wirkverbindung, um von diesem, je nach Wellendrehrichtung ausgelenkt zu werden. Das gleiche gilt ebenso auch für das dritte und vierte Seil, die in Form eines einzigen Seils in der vorstehend erläuterten Weise ausgebildet sein können.

Auch ist es denkbar die vorstehend als erstes und drittes Seil bezeichneten Seile durch ein einziges, durchgängiges Seil zu ersetzen. In diesem Fall ist ein derartig durchgängiges Seil an seiner Seilmitte an einem Seilbefestigungsort längs der Welle verbunden, wohingegen die Seilenden dieses durchgängigen Seils einerseits mit der ersten andererseits mit der zweiten Aktoreinheit verbunden sind.
Das gleiche gilt ebenso auch für das zweite und vierte Seil, die in Form eines einzigen durchgängigen Seils ausgebildet sein können, und das gleichfalls an seiner Seilmitte jedoch am anderen Seilbefestigungsort mit der Welle verbunden ist, wohingegen die Seilenden einerseits mit der ersten andererseits mit der zweiten Aktoreinheit verbunden sind. In diesem Zusammenhang sei auf eine vorteilhafte Weiterbildung dieser erläuterten Ausführungsalternative verwiesen, bei der ein Seilende wenigstens eines der durchgängig ausgebildeten Seile, bspw. jenes das mit der ersten Aktoreinheit verbunden ist, bspw. durch eine in der ersten Aktoreinheit eingebrachten Durchgangsöffnung geführt und mit der zweiten Aktoreinheit in Wirkverbindung gebracht. Vorzugsweise wird das über die erste Aktoreinheit geführte und mit der zweiten Aktoreinheit in Wirkverbindung stehende Seilende mit seinem anderen Seilende, das mit der zweiten Aktoreinheit verbunden ist verknüpft. Mit dieser Maßnahme lassen sich möglicherweise sich ungleich längs des Seils auftretende Seilzugkräfte kompensieren.

Selbst eine Aktorvariante, bei der alle beteiligten Seile in Form eines einzigen durchgängigen Seils ausgebildet sein können, ist grundsätzlich denkbar. Dies soll lediglich den Variantenreichtum des lösungsgemäßen Aktorprinzips verdeutlichen.

Durch eine vorzugsweise spiegelsymmetrisch zur Welle ausgebildete Seil-Paar-Zuführung, d.h. erstes/zweites und drittes/viertes Seilpaar, zur Welle können die längs der Seile wirkenden Zugkräfte auf die Welle gegenseitig vollständig kompensiert werden, so dass die Welle kraftfrei oder weitgehend kraftfrei lagern kann, so dass die Welle leicht- und kleinbauend, d.h. insbesondere mit geringem Wellendurchmesser ausgebildet werden kann. Auch bestehen keine allzu großen mechanischen Anforderungen in Bezug auf Lagerung und Festigkeit des Wellenantriebes.

Durch die diametral zur Welle ausgebildete doppelte Seilzuführung zu jedem der beiden Seilbefestigungsorte längs der Welle sowie aufgrund der jeweils zwischen der ersten und zweiten Umlenkeinheit direkt gekoppelten axialen Bewegung relativ zur Welle, ergeben sich im Bereich der jeweiligen Seilbefestigungsorte doppelhelikale, einlagige Seilwicklungsmuster längs der Welle, die zu einem gleichbleibenden Auf - und Abwicklungsvorgang sowie auch für sich längs der einzelnen Seilzüge gleichbleibend ausbildende Seilzugkräfte beitragen.

Zur Realisierung des lösungsgemäßen Aktors sind grundsätzlich mehrere Realisierungsformen für eine Relativbewegung zwischen beiden Umlenkeinheiten und der Welle denkbar, die in den im weiteren Figuren, in denen alternative Ausführungsbeispiele illustriert sind, erläutert werden. Allen alternativen Ausführungsbeispielen ist die Nutzung jeweils einer doppelhelikalen, einlagigen Aufwicklung zweier längs der Welle diametral gegenüber liegenden Seilzuführungen an jeweils zwei getrennten Seilbefestigungsorten längs der Welle gemeinsam, wobei die Auf- und Abwicklung der einzelnen Seilzüge auf die oder von der Welle vorzugsweise unter jeweils einem konstant vorgegebenen Wickelwinkel erfolgen. Aufgrund der axialen Relativverschiebung zwischen den Umlenkeinheiten und der Welle kann eine zuverlässige Funktion des Aktors ermöglicht werden. Gleichzeitig erhöht sich die Kompaktheit des Aktoraufbaus deutlich, so dass die Nutzung des Aktors für mobile Systeme ermöglicht wird. Die Gesamtmasse eines mit dem lösungsgemäßen Aufbau betriebenen Systems reduziert sich deutlich, da zum einen weder zwei Aktoren für einen Freiheitsgrad benötigt werden und zum anderen die Welle sowie der Drehantrieb leicht- und kleinbauend ausgeführt werden kann. Durch das Vorsehen nur eines einzigen Drehantriebes, den es lediglich in Bezug auf die Geschwindigkeit und Drehrichtung zu steuern gilt, reduziert sich darüber hinaus der Steuerungs- und Regelaufwand sowie auch der Energieverbrauch des gesamten Aktors.

Beispielsweise kann der lösungsgemäße Aktor mit einem geeignet ausgebildeten Gehäuse gekapselt werden, so dass lediglich eine elektrische Zuleitung sowie die betreffenden Seilzüge aus einem derartigen "Black-Box-Aufbau" herausragen, der sich insbesondere für den Einsatz beliebiger Kinematikbewegungen eignet, sei es translatorische und/oder rotatorische Bewegungen und dies unter Aufbringung hoher Bewegungskräfte.

Der lösungsgemäße Aktor lässt sich auch längs der Welle mit weiteren diametral zur Welle angeordneten Umlenkeinheiten mit den dazugehörigen Seilzügen ausbilden, die beispielsweise zur Bewegungsansteuerung weiterer Aktoreinheiten dienen können. Auf diese Weise lässt sich die Funktionsvielfalt bei gleichzeitiger Miniaturisierbarkeit erhöhen.

Alternativ oder in Kombination ist es ebenso denkbar die beteiligten Seile des lösungsgemäßen Aktors jeweils aus zwei oder mehreren Seilsträngen oder Seilfasern auszubilden, die jeweils pro Seilzug gemeinsam über die entsprechende Umlenkeinheit verlaufen und als ein einheitlicher Seilzug auf die Welle oder von der Welle auf- oder abgewickelt werden. Jeder einzelne Seilstrang bzw. jede einzelne Seilfaser kann von der Umlenkeinheit Wellen-abgewandt zu unterschiedlichen Aktoreinheiten verlaufen und diese entsprechend auslenken.

### Kurze Beschreibung der Erfindung

Die Erfindung wird nachstehend ohne Beschränkung des allgemeinen Erfindungsgedankens anhand von Ausführungsbeispielen unter Bezugnahme auf die Zeichnungen exemplarisch beschrieben. Es zeigen:
- Fig. 1: Draufsicht auf einen schematisierten Aufbau eines lösungsgemäß ausgebildeten Aktors zur bidirektionalen Auslenkung eines Rollenpaares,
- Fig. 2 und 3: alternative Ausführungsbeispiele für einen in Figur 1 dargestellten Aktor.

### Wege zur Ausführung der Erfindung, gewerbliche Verwendbarkeit

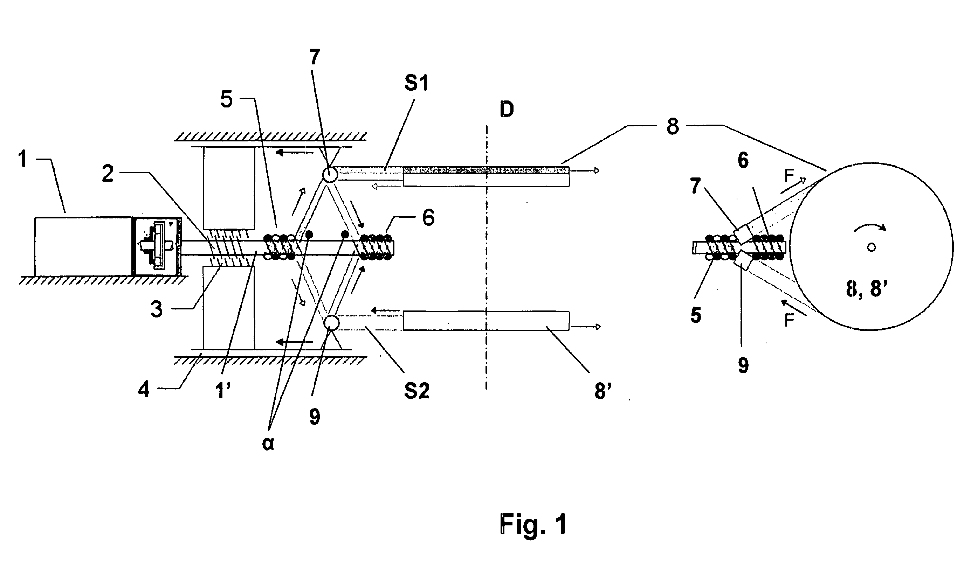

In Figur 1 ist der linken Bilddarstellung die Draufsicht einer lösungsgemäß ausgebildeten Aktoreinheit gezeigt, die einen raumfest angeordneten Wellenantrieb 1 mit einer Welle 1' vorsieht, die im gezeigten Ausführungsbeispiel stimseitig frei endet. Der Wellenantrieb 1 ist typischerweise als Elektromotor mit Getriebestufe ausgebildet, und ist in Bezug zur Drehzahl stufenlos regelbar. Längs der Welle 1' ist an einem ersten Seilbefestigungsort 5 das Ende eines ersten Seils S1 befestigt, das in helikal, einlagiger Wicklung in der dargestellten Weise um die Welle 1' gewickelt ist. Das Seil S1 führt ausgehend von der Welle 1' unter einem Wickelwinkel α direkt zu einer als Umlenkrolle ausgebildeten Umlenkeinheit 7 von der aus das Seil S1 mit einer als Scheibe ausgebildeten Aktoreinheit 8 in Wirkverbindung tritt. Die Scheibe 8 ist um eine Drehachse D drehbar gelagert und weist einen peripheren Scheibenrand auf, um den zumindest bereichsweise das Seil S1 unter Ausbildung eines Reibschlusses anliegt. Im Weiteren verläuft das Seil S1 nach wenigstens einer halben Umwicklung um den Scheibenrand der Scheibe 8 zurück zur Umlenkrolle 7 und schmiegt sich im Bereich des zweiten Seilbefestigungsortes 6 unter Ausbildung ebenfalls einiger einlagig helikaler Seilwicklungen um die Welle 2 an. Beide Enden des Seils S1 sind an den Seilbefestigungsorten 5 und 6 fest mit der Welle 1' verbunden.

In dem illustrierten Ausführungsbeispiel ist davon ausgegangen, dass das Seil S1 einstückig ausgebildet ist und in der vorstehend beschriebenen Weise mit der scheibenförmig ausgebildeten Aktoreinheit 8 in Wirkverbindung tritt. Alternativ ist es gleichfalls möglich, wie bereits eingangs erläutert, dass zwei getrennte Seile mit der scheibenförmigen Aktoreinheit 8 verbunden sind, wobei ein erstes Seil einerseits am Seilbefestigungsort 5 und andererseits mit der scheibenförmigen Aktoreinheit 8 verbunden ist und ein zweites Seil einerseits mit der Welle am Seilbefestigungsort 6 und andererseits mit der scheibenförmigen Aktoreinheit 8.

In dem in Figur 1 illustrierten Fall sei angenommen, dass das vorstehend illustrierte Seil S1 die Welle 1' an den Seilbefestigungsorten 5 und 6 mit gleich viel Wicklungen umschlingt. In diesem Zustand befindet sich die Umlenkeinheit 7 in axialer Projektion zur Achse genau mittig zwischen beiden Seilbefestigungsorten 5 und 6. In dieser Konstellation schließen die mit der die Welle 1' verbundenen Seilstränge des Seils S1 jeweils einen gleichen Wickelwinkel α ein, den es gilt, während des gesamten Auf- und Abwickelprozesses durch koordinierte Axialbewegung der Umlenkeinheit 7 relativ zur Welle 1' konstant zu halten. Auf diese Weise ist gewährleistet, dass sich das Seil S1 an beiden Seilbefestigungsorten 5, 6 jeweils einlagig und in helikaler Weise aufwickelt, wodurch sich eine einheitlich Zugkraft längs der mit der Welle 1' verbundenen Seilstränge je nach Wellendrehrichtung ausbildet.

Zur Kompensation der auf die Welle 1' einwirkenden Seilzugkräfte ist spiegelbildlich zur Welle 1' eine zweite Umlenkeinheit 9 vorgesehen, um die ein zweites Seil S2 geführt ist, dessen Seilenden in gleicher Weise an den Seilbefestigungslagern 5 und 6 befestigt sind und dessen auf die Welle 1' aufgewickelten Seilabschnitte mit jenen des ersten Seils S1 ein doppelhelikal, einlagiges Aufwickelmuster bilden. In gleicher Weise wie die erste Umlenkeinheit 7 ist auch die zweite Umlenkeinheit 9 axial beweglich längs zur Welle 1' geführt, so dass auch die von Seiten der zweiten Umlenkeinheit 9 auf die Welle 1' gerichteten Seilabschnitte über den gesamten Ab - und Aufwickelvorgang konstant bleibenden Wickelwinkel α einschließen.

In gleicher Weise zum ersten Seil S1 umgreift das zweite Seil S2 eine zweite scheibenförmig ausgebildete Aktoreinheit 8', die gemeinsam mit der ersten Aktoreinheit 8 um die Drehachse D drehbar gelagert ist.

Zum Zweck einer mit der Wellendrehzahl abgestimmten axialen Lageverschiebung der Umlenkeinheiten 7, 9 ist längs der Welle 1' eine Schneckengangstruktur 2 angebracht, die in Eingriff mit einer Zahnstange 3 steht, die fest mit den Umlenkeinheiten 7, 9 verbunden ist. Über eine Linearführung 4 werden bei Wellendrehung die Zahnstange 3 sowie die Umlenkeinheiten 7, 9 axial zur Welle 1' ausgelenkt, wodurch die Seilauf- und abwicklung beider Seile S1, S2 auf bzw. von der Welle in kontrollierter Weise unter Einhaltung jeweils eines gleich bleibenden Wickelwinkels α erfolgen können, letztlich mit dem Ziel der Ausbildung eines einlagig doppelhelikalen Wickelmusters um die Welle 1'.

In der in Figur 1 illustrierten rechten Bilddarstellung sind die scheibenförmigen Aktoreinheiten 8, 8' in einer Seitensicht dargestellt. Zur besseren Illustration sind die in der Seitenansicht dargestellten Umlenkeinheiten 7, 9 leicht versetzt zueinander angeordnet; tatsächlich befinden sie sich bei seitlicher Betrachtung in Deckung, um eine vollständige Kompensation der durch die Seilkräfte auf die Welle 1' einwirkenden Zugkräfte zu ermöglichen.

Wie bereits vorstehend zum Fall des Seils S1 erwähnt kann auch das zweite vollständig durchgehende Seil S2 durch zwei getrennte Seile in der vorstehend beschriebenen Weise ersetzt werden.

Die im Ausführungsbeispiel illustrierten scheibenförmig ausgebildeten Aktoreinheit 8, 8' sind lediglich stellvertretend für eine Vielzahl möglicher in Rotation und/oder in translatorische Bewegung versetzbare Aktoren zu verstehen, beispielsweise ist es ebenso möglich, die mit der Aktoreinheit verbundenen Seilbereiche mit zwei um eine Schwenkachse gelagerte Hebelarme zu verbinden. Ebenso sind einer weiteren Ausbildung der Aktoreinheit keine Grenzen gesetzt, nur beispielsweise sei erwähnt, dass an die in Figur 1 gezeigten scheibenartig ausgebildeten Aktoreinheiten 8, 8' je ein Schwenkarm gefügt werden kann, der jeweils bidirektional um die Drehachse D schwenkbar ist.

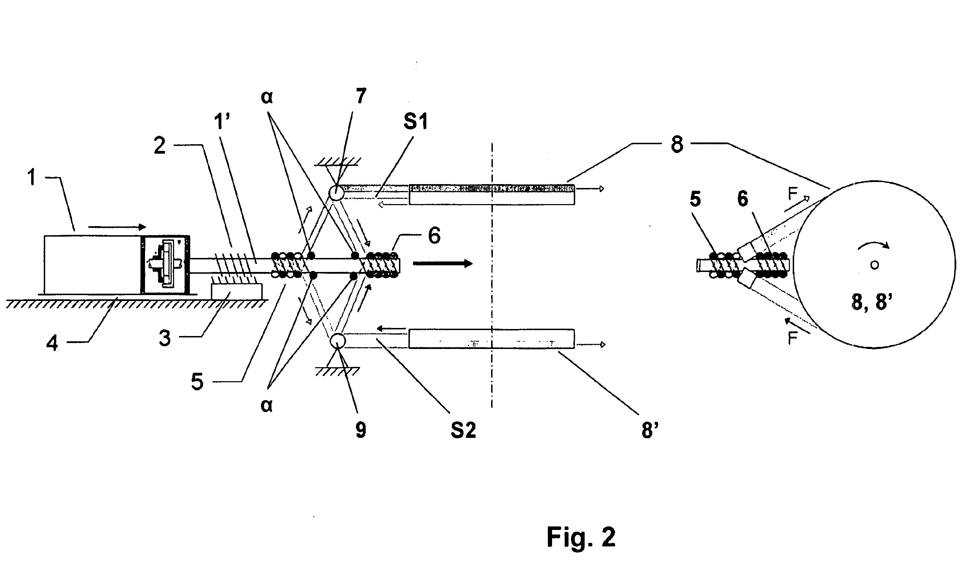

In einem weiteren Ausführungsbeispiel, das in Figur 2 illustriert ist, bezeichnen die bereits zu Figur 1 erläuterten Bezugszeichen identische Komponenten, auf deren wiederholte Beschreibung verzichtet wird. Im Unterschied zu dem Ausführungsbeispiel in Figur 1 sind die Umlenkeinheiten 7, 9 raumfest angebracht. Zur Gewährleistung einer axialen Relativbewegung zwischen den Umlenkeinheiten 7, 9 und der Welle 1' sind im Ausführungsbeispiel gemäß Figur 2 der Wellenantrieb 1 samt Welle 1' an einer Linearführung 4 axial beweglich angeordnet. Die axiale Auslenkung des Wellenantriebes 1 sowie der damit verbundenen Welle 1' erfolgt über einen Eingriff einer raumfest angeordneten Zahnstange 3 mit der an der Welle 2 angebrachten Schneckengangstruktur 2. Wird die Welle 1' in Rotation versetzt, so bewegt sich die Welle 1' relativ zu den raumfest angeordneten Umlenkeinheiten 7, 9. Werden beispielsweise die in Figur 2 jeweils rechten Seilstränge beider über die Umlenkeinheiten 7, 9 geführten Seile S1, S2 auf die Welle 1' aufgewickelt und die jeweils linken Seilstränge von der Welle 1' abgewickelt, so bewegt sich die Welle 1' von links nach rechts (siehe Pfeile). Dabei nimmt die Anzahl der Seilwicklungen am Seilbefestigungsort 6 zu und am Seilbefestigungsort 5 ab. Für den gesamten Abwickelvorgang bleiben die Wickelwinkel α unverändert. Hierdurch kann eine einlagig helikale Aufwicklung der Seile S1 und S2 am Seilbefestigungsort 6 gewährleistet werden.

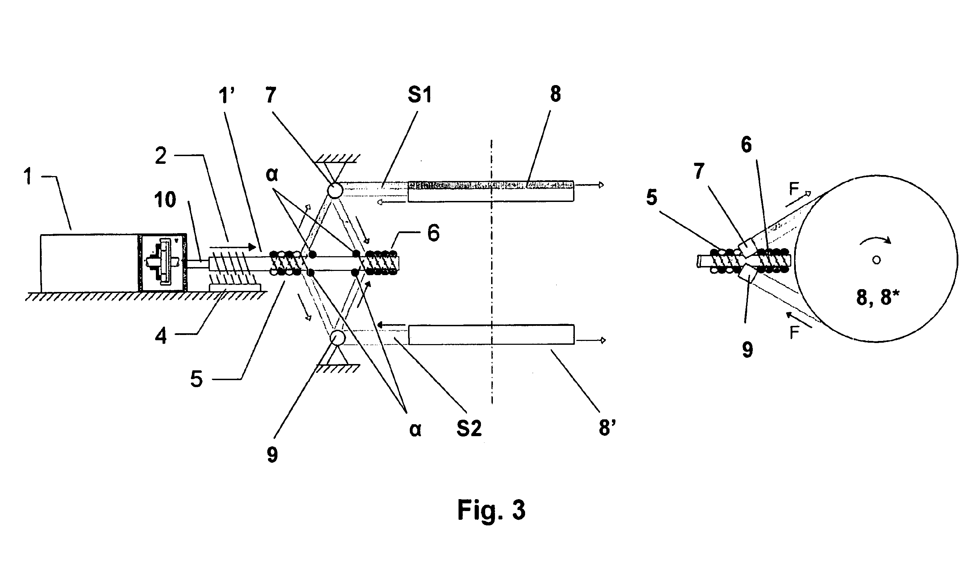

In Figur 3 ist eine dritte Variante für ein Ausführungsbeispiel des lösungsgemäßen Aktors erläutert, bei dem sowohl die Umlenkeinheiten 7, 9 als auch der Wellenantrieb 1 raumfest gelagert sind. Zur relativen Axialbewegung zwischen den Umlenkeinheiten 7, 9 und der Welle 1', auf die die Seile auf- bzw. abgewickelt werden, ist die Welle 1' als Hohlwelle ausgebildet und steht mit der tatsächlichen Antriebswelle 10 des Wellenantriebes 1 in einer drehfesten Wirkverbindung gleichwohl die Hohlwelle 1' axial beweglich zur Antriebswelle 10 gelagert ist. Über eine raumfest angeordnete Zahnstange 4, die in Eingriff steht mit einer auf der Hohlwelle 1' angebrachten Schneckengangstruktur 2 wird die Hohlwelle 1' samt der darauf aufgewickelten Seilabschnitte korrespondierend zur Drehrichtung und Drehgeschwindigkeit axialwärts ausgelenkt. Auch in diesem Falle ist gewährleistet, dass die Seile S1, S2 unter einem konstanten Wickelwinkel α und unter Ausbildung einer einlagig helikalen Wickelanordnung auf die Welle auf- oder von der Welle abgewickelt werden. Die in Figur 3 illustrierte Ausführungsvariante eröffnet die Möglichkeit für einen besonders kompakten und mechanisch einfachen Aufbau des Aktors gilt es jedoch lediglich die Welle 1' relativ zu dem raumfesten Wellenantrieb 1 sowie den raumfesten Umlenkeinheiten 7, 9 axial beweglich zu führen.

Zur Realisierung des lösungsgemäßen Aktors können jegliche Art von hochfesten Seilen oder Bändern eingesetzt werden, über die lediglich Zugkräfte übertragbar sind. Der lösungsgemäße Aktoraufbau ermöglicht somit mit technisch einfachen und kostengünstigen Mitteln die Generierung bidirektional wirkender und durchaus großer Zugkräfte.

**Bezugszeichenliste**

| | |
|---|---|
| 1 | Wellenantrieb |
| 1' | Welle |
| 2 | Schneckengangstruktur |
| 3 | Zahnstange |
| 4 | Linearführung |
| 5 | erster Seilbefestigungsort |
| 6 | zweiter Seilbefestigungsort |
| 7 | erste Umlenkeinheit |
| 8, 8' | Aktoreinheit |
| 9 | zweite Umlenkeinheit |
| 10 | Antriebswelle |
| S1, S2 | Seil |
| D | Drehachse |

## Patentansprüche

1. Aktor mit einem eine Welle (1') in Rotation versetzenden Wellenantrieb (1), um dessen Welle (1') wenigstens zwei band- oder seilartige Elemente, die im folgenden jeweils als "Seile" genannt mit jeweils zwei Seilenden, in Abhängigkeit der Wellendrehrichtung auf- und abwickelbar sind, von denen jeweils das erste Seilende an einem Seilbefestigungsort (5, 6) längs der Welle (1') verbunden ist und die Seilbefestigungsorte (5, 6) beider ersten Seilenden axial längs der Welle (1') zueinander beabstandet sind, und von denen jeweils die zweiten Seilenden mit einer ersten Aktoreinheit (8) derart in Wirkverbindung stehen, dass die Seile zwischen der Welle (1') und der ersten Aktoreinheit (8) stets gestrafft verlaufen, durch Aufwickeln des ersten Seils auf die Welle (1') die erste Aktoreinheit (8) eine rotatorische und/oder translatorische erste Bewegung ausführt, während sich das zweite Seil von der Welle (1') abwickelt, und durch Aufwickeln des zweiten Seils auf die Welle (1') die erste Aktoreinheit eine zur ersten Bewegung umgekehrte Bewegung ausführt, während sich das erste Seil von der Welle (1') abwickelt,
**dadurch gekennzeichnet, dass** eine erste Umlenkeinheit (7) vorgesehen ist, die mit einem orthogonalen Abstand zur Welle (1') sowie in orthogonaler Projektion auf die Welle (1') zwischen beiden Seilbefestigungsorten (5, 6) axialbeweglich relativ zur Welle (1') angeordnet ist und über die das erste und zweite Seil zur unmittelbaren Auf- oder Abwicklung auf oder von der Welle (1') zwangsgeführt sind,
dass ein erstes Seilende eines dritten Seils im Bereich des einen Seilbefestigungsortes (5) und ein erstes Seilende eines vierten Seils im Bereich des anderen Seilbefestigungsortes (6) mit der Welle (1') verbunden sind,
dass die jeweils zweiten Seilenden des dritten und vierten Seils mit der ersten und/oder einer zweiten Aktoreinheit (8') derart in Wirkverbindung stehen, dass das dritte und vierte Seil zwischen der Welle (1') und der ersten und/oder zweiten Aktoreinheit (8') stets gestrafft verlaufen, durch Aufwickeln des dritten Seils auf die Welle (1') die erste und/oder zweite Aktoreinheit (8, 8') eine rotatorische und/oder translatorische erste Bewegung ausführt, während sich das vierte Seil von der Welle (1') abwickelt, und durch Aufwickeln des vierten Seils auf die Welle (1') die erste und/oder zweite Aktoreinheit (8, 8') eine zur ersten Bewegung umgekehrte Bewegung ausführt, während sich das dritte Seil von der Welle (1') abwickelt, und dass eine zweite Umlenkeinheit (9) vorgesehen ist, die mit einem orthogonalen Abstand zur Welle (1') sowie in orthogonaler Projektion auf die Welle (1') zwischen beiden Seilbefestigungsorten (5, 6) axialbeweglich relativ zur Welle (1') angeordnet ist, die der ersten Umlenkeinheit (7) relativ zur Welle (1') diametral gegenüberliegt und über die das dritte und vierte Seil zur unmittelbaren Auf- oder Abwicklung auf die oder von der Welle (1') zwangsgeführt sind.

2. Aktor nach Anspruch 1,
**dadurch gekennzeichnet**, däss das erste und zweite Seil als ein erstes durchgängiges Seil (S1) und das dritte und vierte Seil als ein zweites durchgängiges Seil (S2) ausgebildet sind, und
dass die Seilenden des ersten durchgängigen Seils (S1) an beiden Seilbefestigungsorten (5, 6) mit der Welle (1') verbunden sind und das erste durchgängige Seil (S1) mit der ersten Aktoreinheit (8) in Wirkverbindung steht,
dass die Seilenden des zweiten durchgängigen Seils (S2) an beiden Seilbefestigungsorten (5, 6) mit der Welle (1') verbunden sind und das zweite durchgängige Seil (S2) mit der zweiten Aktoreinheit (8') in Wirkverbindung steht.

3. Aktor nach Anspruch 1,
**dadurch gekennzeichnet, dass** das erste und dritte Seil als ein erstes durchgängiges Seil und das zweite und vierte Seil als ein zweites durchgängiges Seil (S2) ausgebildet sind,
dass die Seilenden des ersten durchgängigen Seils (S1) jeweils mit der ersten und zweiten Aktoreinheit (8, 8') verbunden sind und der mittlere Bereich des ersten durchgängigen Seils (S1) an dem einen Seilbefestigungsort (5) mit der Welle (1') verbunden ist, und
dass die Seilenden des zweiten durchgängigen Seils (S2) jeweils mit der ersten und zweiten Aktoreinheit (8, 8') verbunden sind und der mittlere Bereich des zweiten durchgängigen Seils (S2) an dem anderen Seilbefestigungsort (6) mit der Welle (1') verbunden ist.

4. Aktor nach Anspruch 1,
**dadurch gekennzeichnet, dass** das erste und dritte Seil als ein erstes durchgängiges Seil (S1) und das zweite und vierte Seil als ein zweites durchgängiges Seil (S2) ausgebildet sind,
dass die Seilenden des ersten durchgängigen Seils (S1) jeweils mit der ersten und zweiten Aktoreinheit (8, 8') in Wirkverbindung stehen und der mittlere Bereich des ersten durchgängigen Seils (S1) an dem einen Seilbefestigungsort (5) mit der Welle (1') verbunden ist, und
dass die Seilenden des zweiten durchgängigen Seils (S2) jeweils mit der ersten und zweiten Aktoreinheit (8, 8') in Wirkverbindung stehen und der mittlere Bereich des zweiten durchgängigen Seil (S2) an dem anderen Seilbefestigungsort (6) mit der Welle (1') verbunden ist.

5. Aktor nach einem der Ansprüche 1 bis 4,
**dadurch gekennzeichnet, dass** die erste und zweite Umlenkeinheit (7, 9) relativ zur Welle (1') derart axialbeweglich geführt sind, dass die Seile jeweils unter einem konstanten Wickelwinkel α, mit α ungleich 90°, auf die Welle (1') auf- und abwickelbar sind.

6. Aktor nach einem der Ansprüche 1 bis 5,
**dadurch gekennzeichnet, dass** die erste und zweite Umlenkeinheit (7, 9) relativ zur Welle (1') derart axialbeweglich geführt sind, dass die jeweils im Bereich eines Seilbefestigungsortes (5, 6) angebrachten Seile während des Auf- und Abwickelns eine ineinander verschränkte, doppelhelikale, einlagige Wickelanordnung längs der Welle (1') annehmen.

7. Aktor nach einem der Ansprüche 1 bis 6,
**dadurch gekennzeichnet, dass** der Wellenantrieb (1) und die Welle (1') raumfest und die erste und zweite Umlenkeinheit (7, 9) axialbeweglich zur raumfesten Welle (1') angebracht sind.

8. Aktor nach Anspruch 7,
**dadurch gekennzeichnet, dass** eine Getriebeeinheit mit der Welle (1') in Eingriff steht, die die Wellendrehung in eine axial orientierte Linearbewegung umsetzt, an die die erste und zweite Umlenkeinheit (7, 9) gekoppelt sind.

9. Aktor nach einem der Ansprüche 1 bis 6,
**dadurch gekennzeichnet, dass** der Wellenantrieb (1) und die Welle (1') axialbeweglich und die erste.und zweite Umlenkeinheit (7, 9) raumfest angeordnet sind.

10. Aktor nach Anspruch 9,
**dadurch gekennzeichnet, dass** eine Getriebeeinheit mit der Welle (1') in Eingriff steht, die die Wellendrehung in eine axial orientierte Linearbewegung umsetzt, an die der Wellenantrieb und die Welle gekoppelt sind.

11. Aktor nach einem der Ansprüche 1 bis 6,
**dadurch gekennzeichnet, dass** der Wellenantrieb (1) und die erste und zweite Umlenkeinheit (7, 9) raumfest angebracht und die Welle (1') axialbeweglich ausgebildet sind.

12. Aktor nach Anspruch 11,
**dadurch gekennzeichnet, dass** die Welle (1') zweiteilig ausgebildet ist, einen mit dem Wellenantrieb (1) axialfesten ersten Wellenteil (10) und einen axialbeweglichen aber mit dem ersten Wellenteil drehfest verbundenen zweiten Wellenteil(1') aufweist, der über eine Getriebeeinheit in Eingriff steht, die die Wellendrehung in eine axial orientierte Linearbewegung umsetzt.

13. Aktor nach einem der Ansprüche 1 bis 12,
**dadurch gekennzeichnet, dass** die mit der Welle (1') in Wirkverbindung tretenden Seile sowie die erste und zweite Umlenkeinheit (7, 9) symmetrisch zur Wellenachse derart angeordnet sind, so dass sich die auf die Welle (1') wirkenden Seilzugkräfte kompensieren.

14. Aktor nach einem der Ansprüche 1, 5 bis 13,
**dadurch gekennzeichnet, dass** die Aktoreinheit einen um eine Drehachse (D) schwenkbaren Hebel mit zwei Hebelarmen vorsieht, und
dass an einem Hebelarm das erste und/oder dritte und an dem anderen Hebelarm das zweite und/oder vierte Seil angebracht sind.

15. Aktor nach einem der Ansprüche 1, 5 bis 13,
**dadurch gekennzeichnet, dass** die Aktoreinheit wenigstens eine, drehbar um eine Drehachse (D) angeordnete, scheibenartige Einheit aufweist, und
dass am peripheren Umfangsbereich der Einheit die jeweils zweiten Seilenden des ersten und zweiten und/oder dritten und vierten Seils mit der Einheit verbunden sind.

16. Aktor nach einem der Ansprüche 2 oder 5 bis 13,
**dadurch gekennzeichnet, dass** die Aktoreinheit einen um eine Drehachse (D) schwenkbaren Hebel mit zwei Hebelarmen vorsieht, und
dass beide Hebelarme mit dem mittleren Seilbereich beider durchgängiger Seile verbunden sind

17. Aktor nach einem der Ansprüche 2 oder 5 bis 13,
**dadurch gekennzeichnet, dass** die Aktoreinheit wenigstens eine, drehbar um eine Drehachse angeordnete, scheibenartige Einheit aufweist, und
dass am peripheren Umfangsbereich der Einheit jeweils die mittleren Seilbereiche beider durchgängiger Seile mit der Einheit verbunden sind.

## Claims

1. An actuator comprising a shaft drive (1) setting a shaft (1') in rotation, around the shaft (1) of said drive at least two belt-like or rope-like elements, hereinafter in each case called "ropes", each having two rope ends, can be wound and unwound depending on the rotational direction of the shaft, of which ropes in each case the first rope end is connected to a rope fastening point (5, 6) along the shaft (1'), and the rope fastening points (5, 6) of both first rope ends are axially spaced apart from each other along the shaft (1'), and of which in each case the second rope ends are in operative connection with a first actuator unit (8) in such a manner that the ropes between the shaft (1') and the first actuator unit (8) run always in a tightened manner, and by winding the first rope onto the shaft (1'), the first actuator unit (8) carries out a rotational and/or translational first movement while the second rope unwinds from the shaft (1'), and by winding the second rope onto the shaft (1'), the first actuator unit carries out a movement reversed to the first movement while the first rope unwinds from the shaft (1'),
**characterized in that** a first deflection unit (7) is provided which is arranged at an orthogonal distance from the shaft (1') and in orthogonal projection on the shaft (1') between the two rope fastening points (5, 6) and is axially moveable relative to the shaft (1'), and via which the first and second ropes are positively guided for immediate winding or unwinding onto or from the shaft (1'),
that a first rope end of a third rope is connected to the shaft (1') in the region of the one rope fastening point (5), and a first rope end of a fourth rope is connected to said shaft in the region of the other rope fastening point (6),
that in each case the second rope ends of the third and fourth ropes are in operative connection with the first and/or second actuator unit (8') in such a manner that the third and fourth ropes between the shaft (1') and the first and/or second actuator unit (8') run always in a tightened manner, and by winding the third rope onto the shaft (1'), the first and/or the second actuator unit (8, 8') carries out a rotational and/or translational first movement while the fourth rope unwinds from the shaft (1'), and by winding the fourth rope onto the shaft (1'), the first and/or the second actuator (8, 8') unit carries out a movement reversed to the first movement while the third rope unwinds from the shaft (1'),
and that a second deflection unit (9) is provided which is arranged at an orthogonal distance from the shaft (1') and in orthogonal projection on the shaft (1'), between the two rope fastening points (5, 6) and is axially moveable relative to the shaft (1'), which, relative to the shaft (1'), is located diametrically opposite to the first deflection unit (7), and via which the third and fourth ropes are positively guided for immediate winding or unwinding onto or from the shaft (1').

2. The actuator according to claim 1,
**characterized in that** the first and second ropes are configured as a first continuous rope (S1), and the third and fourth ropes are configured as a second continuous rope (S2), and
that the rope ends of the first continuous rope (S1) are connected to the shaft (1') at both rope fastening points (5, 6), and the first continuous rope (S1) is in operative connection with the first actuator unit (8),
that the rope ends of the second continuous rope (S2) are connected to the shaft (1') at both rope fastening points (5, 6), and the second continuous rope (S2) is in operative connection with the second actuator unit (8').

3. The actuator according to claim 1,
**characterized in that** the first and third ropes are configured as a first continuous rope, and the second and fourth ropes are configured as a second continuous rope (S2),
that the rope ends of the first continuous rope (S1) are in each case connected to the first and second actuator unit (8, 8'), and the central region of the first continuous rope (S1) is connected to the shaft (1') at the one rope fastening point (5), and
that the rope ends of the second continuous rope (S2) are in each case connected to the first and second actuator units (8, 8'), and the central region of the second continuous rope (S2) is connected to the shaft (1') at the other rope fastening point (6).

4. The actuator according to claim 1,
**characterized in that** the first and third ropes are configured as a first continuous rope (S1), and the second and fourth ropes are configured as a second continuous rope (S2),
that the rope ends of the first continuous rope (S1) are in each case in operative connection with the first and second actuator units (8, 8'), and the central region of the first continuous rope (S1) is connected to the shaft (1') at the one rope fastening point (5), and
that the rope ends of the second continuous rope (S2) are in each case in operative connection with the first and second actuator units (8, 8'), and the central region of the second continuous rope (S2) is connected to the shaft (1') at the other rope fastening point (6).

5. The actuator according to any one of the claims 1 to 4, **characterized in that** the first and second deflection units (7, 9) are guided axially moveable relative to the shaft (1') in such a manner that the ropes can be wound and unwound onto and from the shaft (1') at a constant angle α, with α unequal to 90°.

6. The actuator according to any one of the claims 1 to 5, **characterized in that** the first and second deflection units (7, 9) are guided axially moveable relative to the shaft (1') in such a manner the ropes attached in each case in the region of a rope fastening point (5, 6) assume during winding and unwinding an intertwined, double-helical single-layer winding arrangement along the shaft (1').

7. The actuator according to any one of the claims 1 to 6, **characterized in that** the shaft drive (1) and the shaft (1') are spatially-fixed, and the first and second deflection units (7, 9) are attached axially moveable relative to the spatially-fixed shaft (1').

8. The actuator according to claim 7, **characterized in that** a gear unit is in engagement with the shaft (1'), which gear unit converts the shaft rotation into an axially oriented linear movement and to which the first and second deflection units (7, 9) are coupled.

9. The actuator according to any one of the claims 1 to 6, **characterized in that** the shaft drive (1) and the shaft (1') are axially moveable and the first and second deflection units (7, 9) are arranged in a spatially-fixed manner.

10. The actuator according to claim 9, **characterized in that** a gear unit is in engagement with the shaft (1'), which gear unit converts the shaft rotation into an axially oriented linear movement and to which the drive shaft and the shaft are coupled.

11. The actuator according to any one of the claims 1 to 6, **characterized in that** the shaft drive (1) and the first and second deflection units (7, 9) are attached in a spatially-fixed manner and the shaft (1') is configured so as to be axially moveable.

12. The actuator according to claim 11, **characterized in that** the shaft (1') is formed in two pieces and has a first shaft portion (10) that is axially fixed to the shaft drive (1), and a second shaft portion (1') that is axially moveable but is connected to the first shaft portion in a rotationally fixed manner, which second shaft portion is engaged via a gear unit which converts the shaft rotation into an axially oriented linear movement.

13. The actuator according to any one of the claims 1 to 12, **characterized in that** the ropes getting in operative connection with the shaft (1') and also the first and second deflection units (7, 9) are arranged symmetrical to the shaft axis in such a manner that the rope forces acting on the shaft (1') compensate each other.

14. The actuator according to any one of the claims 1 and 5 to 13,
**characterized in that** the actuator unit provides a lever that is swivelable about a rotational axis (D) and has two lever arms,
and that on the one lever arm, the first and/or third rope are attached, and on the other lever arm, the second and/or fourth rope are attached.

15. The actuator according to any one of the claims 1 and 5 to 13, **characterized in that** the actuator unit has at least one disk-like unit that is arranged rotatably about a rotational axis (D), and that on the peripheral circumferential region of the unit, in each case the second rope ends of the first and second and/or third and fourth ropes are connected to the unit.

16. The actuator according to any one of the claims 2 or 5 to 13,
**characterized in that** the actuator unit provides a lever that is swivelable about a rotational axis (D) and has two lever arms, and
that both lever arms are connected to the central rope region of both continuous ropes.

17. The actuator according to any one of the claims 2 or 5 to 13, **characterized in that** the actuator unit has at least one disk-like unit that is arranged rotatably about a rotational axis (D), and that on the peripheral circumferential region of the unit, in each case the central rope regions of both continuous ropes are connected to the unit.

## Revendications

1. Actionneur avec un système d'entraînement à arbre (1) mettant en rotation un arbre (1'), autour de l'arbre (1') duquel au moins deux éléments de type bande ou câble, désignés ci-après à chaque fois par « câbles », avec à chaque fois deux extrémités de câble sont enroulables et déroulables en fonction du sens de rotation de l'arbre, dont à chaque fois la première extrémité de câble est reliée à un point de fixation de câble (5, 6) le long de l'arbre (1') et les points de fixation de câble (5, 6) des deux premières extrémités de câble sont éloignés l'un de l'autre axialement lé long de l'arbre (1') et dont à chaque fois les deux extrémités de câble sont en liaison active avec une première unité d'actionneur (8) de telle sorte que les câbles passent toujours tendus entre l'arbre (1') et la première unité d'actionneur (8), la première unité d'actionneur (8) effectuant par enroulement du premier câble sur l'arbre (1') un premier mouvement rotatoire et/ou translatoire, pendant que le deuxième câble se déroule de l'arbre (1') et que la première unité d'actionneur effectue un mouvement inversé au premier mouvement par enroulement du deuxième câble sur l'arbre (1'), pendant que le premier câble se déroule de l'arbre (1') **caractérisé en ce qu'**une première unité de renvoi (7) est prévue qui est montée de façon mobile dans le sens axial par rapport à l'arbre (1') avec un intervalle orthogonal par rapport à l'arbre (1') ainsi qu'en projection orthogonale sur l'arbre (1') entre les deux points de fixation de câble (5, 6) et par laquelle le premier et le deuxième câble sont en guidage forcé pour l'enroulement ou le déroulement direct sur ou depuis l'arbre (1'), et **en ce que** la première extrémité de câble d'un troisième câble dans la zone d'un point de fixation de câble (5) et une première extrémité de câble d'un quatrième câble dans la zone de l'autre point de fixation de câble (6) sont reliées à l'arbre (1'), **en ce qu**'à chaque fois les deuxièmes extrémités de câble du troisième et quatrième câble sont en liaison active avec la première et/ou la deuxième unité d'actionneur (8') de telle sorte que le troisième et le quatrième câble passent entre l'arbre (1') et la première et/ou deuxième unité d'actionneur (8') toujours tendus, la première et/ou la deuxième unité d'actionneur (8, 8') effectuant par enroulement du troisième câble sur l'arbre (1') un premier mouvement rotatoire et/ou translatoire, pendant que le quatrième câble se déroule de l'arbre (1') et la première et/ou la deuxième unité d'actionneur (8, 8') effectuant par enroulement du quatrième câble sur l'arbre (1') un mouvement inversé par rapport au premier mouvement pendant que le troisième câble se déroule de l'arbre (1'), **en ce qu**'une deuxième unité de renvoi (9) est prévue qui est montée de façon mobile dans le sens axial par rapport à l'arbre (1') avec un intervalle orthogonal par rapport à l'arbre (1') ainsi qu'en projection orthogonale sur l'arbre (1') entre les deux points de fixation de câble (5, 6), qui est diamétralement opposée à la première unité de renvoi (7) par rapport à l'arbre (1') et par laquelle le troisième et le quatrième câble sont en guidage forcé pour l'enroulement ou le déroulement direct sur ou depuis l'arbre (1'),

2. Actionneur selon la revendication 1 **caractérisé en ce que** le premier et le deuxième câble sont constitués comme un premier câble (S1) traversant et le troisième et quatrième câble comme un deuxième câble (S2) traversant et **en ce que** les extrémités de câble du premier câble traversant (S1) sont reliées à l'arbre (1') aux deux points de fixation de câble (5, 6) et le premier câble (S1) traversant est en liaison active avec la première unité d'actionneur (8), **en ce que** les extrémités de câble du deuxième câble (S2) traversant sont reliées à l'arbre (1') aux deux points de fixation de câble (5, 6) et le deuxième câble (S2) traversant est en liaison active avec la deuxième unité d'actionneur (8').

3. Actionneur selon la revendication 1 **caractérisé en ce que** le premier et le troisième câble sont constitués comme un premier câble traversant et le deuxième et quatrième câble comme un deuxième câble (S2) traversant, **en ce que** les extrémités de câble du premier câble (S1) traversant sont à chaque fois reliées avec la première et la deuxième unité d'actionneur (8, 8') et la zone centrale du premier câble (S1) traversant est reliée à l'arbre (1') à un point de fixation de câble (5) et **en ce que** les extrémités de câble du deuxième câble (S2) traversant sont à chaque fois reliées avec la première et la deuxième unités d'actionneur (8, 8') et la zone centrale du deuxième câble (S2) traversant à l'arbre (1') à l'autre point de fixation de câble (6).

4. Actionneur selon la revendication 1 **caractérisé en ce que** le premier et le troisième câble sont constitués comme un premier câble (S1) traversant et le deuxième et quatrième câble comme un deuxième câble (S2) traversant, **en ce que** les extrémités de câble du premier câble (S1) traversant sont en liaison active à chaque fois avec la première et la deuxième unités d'actionneur (8, 8') et la zone centrale du premier câble (S1) traversant est reliée à l'arbre (1') à un point de fixation de câble (5) et **en ce que** les extrémités de câble du deuxième câble (S2) traversant sont en liaison active à chaque fois avec la première et la deuxième unité d'actionneur (8, 8') et la zone centrale du deuxième câble (S2) traversant est reliée à l'arbre (1'), à l'autre point de fixation de câble (6).

5. Actionneur selon une quelconque des revendications 1 à **4 caractérisé en ce que** la première et la deuxième unité de renvoi (7, 9) sont guidées de façon mobile dans le sens axial par rapport à l'arbre (1') de telle sorte que les câbles peuvent à chaque fois être enroulés et déroulés sur l'arbre (1') avec un angle d'enroulement α constant, avec α différent de 90°.

6. Actionneur selon une quelconque des revendications 1 à 5 **caractérisé en ce que** la première et la deuxième unité de renvoi (7, 9) sont guidées de façon mobile dans le sens axial par rapport à l'arbre (1') de telle sorte que les câbles montés à chaque fois dans la zone d'un point de fixation de câble (5, 6) adoptent, pendant l'enroulement et le déroulement, une position d'enroulement à une couche, à double hélice, entrelacés l'un dans l'autre le long de l'arbre (1').

7. Actionneur selon une quelconque des revendications 1 à 6 **caractérisé en ce que** le système d'entraînement d'arbre (1) et l'arbre (1') sont montés stabilisés et la première et la deuxième unité de renvoi (7, 9) sont montées de façon mobile dans le sens axial par rapport à l'arbre (1') stabilisé.

8. Actionneur selon la revendication 7 **caractérisé en ce qu**'un système de transmission en prise avec l'arbre (1') transforme la rotation de l'arbre en un mouvement linéaire axialement orienté auquel sont couplées la première et la deuxième unité de renvoi (7, 9).

9. Actionneur selon une quelconque des revendications 1 à 6 **caractérisé en ce que** le système d'entraînement d'arbre (1) et l'arbre (1') sont montés de façon mobile dans le sens axial et la première et la deuxième unité de renvoi (7, 9) sont montées de façon stabilisée.

10. Actionneur selon la revendication 9 **caractérisé en ce qu**'un système de transmission en prise avec l'arbre (1') transforme la rotation de l'arbre en un mouvement linéaire orienté axialement auquel sont couplés le système d'entraînement d'arbre et l'arbre.

11. Actionneur selon une quelconque des revendications 1 à 6 **caractérisé en ce que** le système d'entraînement d'arbre (1) et la première et la deuxième unité de renvoi (7, 9) montés de façon stabilisée et l'arbre (1') sont constitués de façon mobile dans le sens axial.

12. Actionneur selon la revendication 11 **caractérisé en ce que** l'arbre (1') est constitué en deux parties, présente une première partie d'arbre (10) fixe dans le sens axial avec le système d'entraînement d'arbre (1) et une deuxième partie d'arbre (1') mobile dans le sens axial mais reliée fixe à la première partie d'arbre, qui est en prise par un système de transmission qui transforme la rotation de l'arbre en un mouvement linéaire orienté axialement.

13. Actionneur selon une quelconque des revendications 1 à 12 **caractérisé en ce que** les câbles entrant en liaison active avec l'arbre (1') ainsi que la première et la deuxième unité de renvoi (7, 9) sont montés symétriquement par rapport à l'axe de l'arbre de telle sorte que les forces de traction de câble agissant sur l'arbre (1') se compensent.

14. Actionneur selon une quelconque des revendications 1, 5 à 13 **caractérisé en ce que** l'unité d'actionneur prévoit un levier pivotable autour d'un axe de rotation (D) avec deux bras de levier et **en ce que** sur un bras de levier sont montés le premier et/ou le troisième câble et sur l'autre bras de levier le deuxième et/ou quatrième câble.

15. Actionneur selon une quelconque des revendications 1, 5 à 13 **caractérisé en ce que** l'unité d'actionneur présente au moins une unité en forme de disque, montée pivotante autour d'un axe de rotation (D) et **en ce que** sur la zone périmétrique périphérique de l'unité, les deuxième extrémités du premier et deuxième et/ou troisième et quatrième câble sont à chaque fois reliées à l'unité.

16. Actionneur selon une quelconque des revendications 2, 5 à 13 **caractérisé en ce que** l'unité d'actionneur prévoit un levier pivotable autour d'un axe de rotation (D) avec deux bras de levier et **en ce que** les deux bras de levier sont reliés avec la zone de câble centrale des deux câbles traversants.

17. Actionneur selon une quelconque des revendications 2, 5 à 13 **caractérisé en ce que** l'unité d'actionneur présente au moins une unité en forme de disque montée pivotante autour d'un axe de rotation et **en ce que** sur la zone périmétrique périphérique de l'unité, à chaque fois les zones de câble centrales des deux câbles traversants sont reliées à l'unité.
